# EUROPEAN PATENT SPECIFICATION

(11) **EP 0 502 093 B1**
(45) Date of publication and mention of the grant of the patent: **06.08.1997**
(21) Application number: 91900416.8
(22) Date of filing: 22.11.1990
(51) Int. Cl.: B41J 5/10

(54) **KEYBOARD**
TASTATUR
CLAVIER

(30) Priority: 23.11.1989 SE 8903939
(43) Date of publication of application: 09.09.1992
(73) Proprietor: ULLMAN, Johan, S-412 55 Göteborg (SE)
(72) Inventor: ULLMAN, Johan, S-412 55 Göteborg (SE)
(74) Representative: Mossmark, Anders
(86) International application number: SE9000759
(87) International publication number: WO9108113

(56) References cited:
- EP-A- 0 224 600
- EP-A- 0 251 643
- WO-A-87/06883
- DE-A- 2 218 065
- DE-A- 3 318 227
- GB-A- 2 181 096
- US-A- 3 319 884

## Description

### Technical field:

The present invention relates to a keyboard for choice of symbols. Such keyboards are characterized in that they have a great number of keys in the order of amount of 50, which are used frequently by the operator and are included in long series and which consequently shall be easily attainable and easily identifiable for bringing about a quick work, preferably without the aid of the eyes. With relation to these characteristics such a keyboard differs from operating keyboards which can have a very small number of keys or other operating numbers or alternatively a very large number which then are served at a low frequency and usually in short series. A middle position is represented by a keyboard on calculating machines at which the keys may be operated frequently and in long series but where they are limited to the ten figures and a few operating keys having less frequent use. This type of keyboard is also used for some other operation for example at telephones. The invention relates accordingly to the first type of keyboard which always is intended to be served by both hands.

### State of the art:

The most frequent embodiment of the keyboard in question is the one that exists on typing machines, data terminals and the like. It is sometimes called the QWERTY-keyboard due to the arrangement of the uppermost row of letter keys. The contact surfaces of the keys are substantially in a common plane which is horizontal or slopes somewhat upwardly by its edge which is turned away from the operator. A trained typist has fingers close enough floating above the keyboard and pushes down the different keys by fingermovements and small movements of the hands. This means that the hand does not have any accentuated orienting points and the touch of the fingers is more oriented by an inherent feeling of where on the plane the key in question is located than by a feeling of the relation between any stationary reference point and the key in question which is to be pushed down. A trained machine operator therefore performs a work which can be compared with piano playing and which requires a long time education and continuous training.

To reach the most frequently used keys, letters occur with different frequency in the language, with the finger in question and operate them by the most movable fingers firstly the four finger, the letters are not arranged in alphabetical order but for the most quick writing of a trained operator. This results in that the letters are difficult to find for somebody which is completely untrained. Without a well performed education nobody will reach a rational way of writing which besides said "floating serving" and complete knowledge of the location of the keys for the different symbols also requires such a great feeling for the exact position of the keys in the plane so that some control of the keyboard with the eyes when writing is not necessary. Only by reaching this stage one can work rationally from the manuscript or in connection with the service of a data terminal where one has a possibility to control the symbols as they are disclosed on the display unit.

### Technical problem:

The usual type of keyboard, which originally is based on relatively restricted mechanical conditions of the earlier only type of type writers, the mechanical, gives certainly a quick way of writing for a trained machine operator but they are slow and difficult to operate for the untrained and also for the one who has a long training but not a proper education. This one will be limited to so called four finger writing having the whole time visual control of the keys. This has through the rise of the data techniques become a still greater handicap as one now needs to use the eyes for control of what is shown on the screen which is not necessary at a usual typewriter. It is also so that the distribution of the data machines has made still more groups of people serving keyboards. Many of the persons who are in these new groups which often have high salaries have practically no typewriter education and will accordingly work irrational with the traditional keyboard.

A further disadvantage with the modern technique is that one needs to use the eyes to read the keys. At electrical typewriters and data equipment one can often in a simple way by means of the electronics change the different designation of the keys with relation to the symbols; one can for example change between roman letters and greek and other symbols for example formula writings. If every single key is marked with a symbol this will make the writing more difficult. If one on the contrary does not have to read on the keys, the marking of the position of the different symbols can be shown on a scheme on the display unit. If such indirect display, and some type of display is necessary if one has to shift between different keyboards arrangements, an especially good possibility for orientation of the fingers with relation to the keys without the help of the eyes is required.

Also for the one who has a complete education in typewriting the traditional keyboard has some disadvantages. These relate especially to the fact that they require an inconvenient working position for the physiology of man having the hands turned to a stressed position both in relation to the horizontal plane and to the sagittal plane (the plane through the symmetry plane of man through the back bone and extending from the back to the former side of the breast). This stressed position gives, according to what the experience shows in many cases, rise to overstrain of some muscles and muscular attachments having sicknesses as a result.

These disadvantages are known. To make a physiologically more correct handposition possible it has been proposed to divide the keys in two or more groups, which have an angle relative to each other. This has for example been proposed in DE 2 607 126 and US 4 483 634. The US-patents 3 990 565 and 4 661 005 and the document WO-A-87 06883 do also propose dividing of the usual keyboard on two separate parts on separate elements which can be positioned in different angular positions. Through these solutions one has obtained an ergonomically better solution but said orienting problem for the one who is less trained has not been solved. An example of an attempt to solve said orienting problem is disclosed in DE 1 810 119 in which publication an operating arrangement is shown where all fingers have practically locked positions and where each finger serves only two keys. This type of solution is however not suitable for typewriters where a demand has to be put on the possibility to write quickly as well as a good orientation. The present invention relates besides that as mentioned above, not to the last mentioned type of equipment having a few keys.

### The solution:

The disadvantages and problems described connected with the keyboards for choice of symbols are solved by the present invention as defined in claim 1

### Advantages:

Through the present invention a keyboard has been obtained that, with regard to the functions of the human bodies which gives us a possibility to tactilly recognize objects that quickly gives the one who uses it, a possibility to orient himself to find the keys in question which are to be operated.

Further a keyboard has been obtained which does not bind the movements of the fingers and the hand in such way that a quick writing of for example running text is obstructed.

Still a further advantage is that the keyboard has been constructed taken into regard the physiology of man so that unnecessary and unsuitable stress of the body can be avoided resulting in minimizing the risk for a muscle overstraining and damages.

### Description of the figures:

Two embodiment examples of the invention are shown on the attached drawings where:
- Fig. 1: shows the arrangement according to the invention schematically and in relation to an operator seen from above;
- Fig. 2: shows the same arrangement in a perspective view;
- Fig. 3: shows the arrangement in a more complete first shape of the product for which the invention is a base, the picture being a perspective view;
- Fig. 4: shows the embodiment shown in Fig. 2 in a view from above;
- Fig. 5: shows a second embodiment in a side perspective view; and
- Fig. 6: shows the same embodiment in a perspective view seen from the front side.

### Description of the preferred embodiments:

At the embodiment which now shall be described, it is presumed that the keyboard according to the invention is intended for writing of text. The symbols for the letters of the alphabet is then required, for the ten figures, for the punctuation symbols and possibly more specialized symbols and symbols for the operating functions such as for shifting between small and capital letters for reversing etc. If the keyboard shall be used for a computer the number of operating keys can be relatively large to make it possible to carry out the many operations which a computer can perform. These keys and other types of operating means such as slide control shall during writing and in connection therewith be operated at different frequencies. In the present description for the sake of clarity the keys have been divided in different groups according to the frequency of use as shown below:
a) Keys having symbols which are used highly frequently. By this it is meant the usual 24 letters in the alphabet having the keys divided in six groups each including 4 keys. The same keys are used for corresponding symbols in capital shape, but then only by means of shifting.
b) Keys having medium frequently used symbols, some of the least frequently used letters in the alphabet, the figures and the most common punctuations. Here it is supposed that maximum 16 keys which by means of a simple shifting possibility can give at most 32 symbols.
c) Low frequently used symbols of a strange alphabet.
d) Shifting key for shifting between a first choice of symbols for the keys and a second choice; for the letters, a choice between small and capital letters.
e) Other keys which can be regarded as less frequently used than the shifting keys.
f) Adjusting means for example four marginals which usually are used only at the beginning of a writing or for special operations; such means may have different shape and do accordingly not have to be keys.

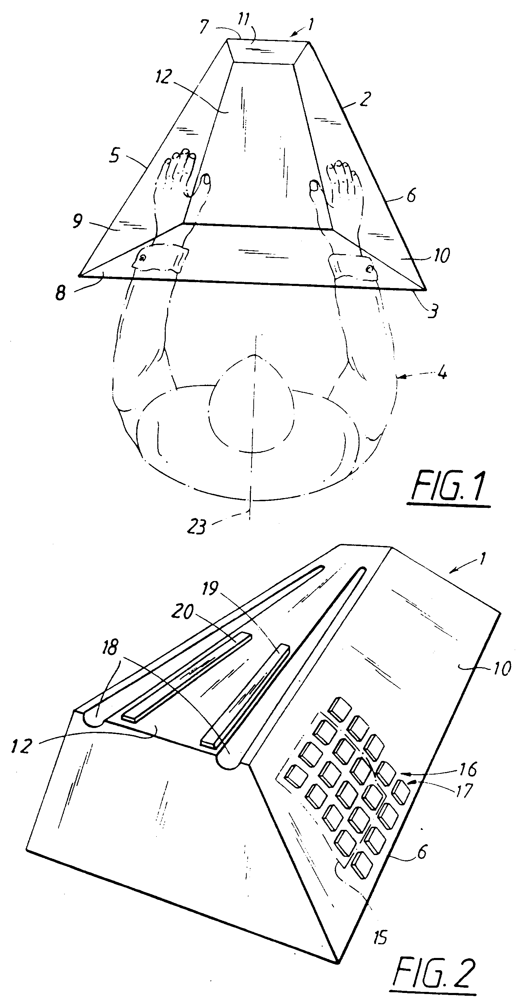

It appears from Fig. 2 how these keys for differently frequent use can be arranged. Initially it shall however be described how the keyboard is constructed as to its shape. This appears from Figs. 1 and 2. The keyboard is thus located on a body 1 which at the embodiment shown in the simplest way can be described as looking like a pyramid and extending from a bottom surface to having the shape of a parallel trapezoid the longer parallel side 3 of which is intended to be turned towards the person that shall use the keyboard which in Fig. 1 is denoted with 4. For the sake of clarity it is assumed that the bottom surface 2 is arranged in a horizontal plane. From the edges of the bottom surface 2, said front edge 3, side edges 5 and 6 and a further edge 7, sides of the body extend upwardly from the bottom surface 2 and slope inwardly toward its centre. Therewith a front side is formed, a left side 9 (seen from the operator), a right side 10 and a further side 11. The upper edges of these sides are connected by means of an upper surface 12.

As appears from Fig. 2 the keys are so divided that half of the highly frequently used symbols (a) are arranged in three rows of keys between upper surface 12 and the bottom surface 2, along the sides 9 and 10 having four keys in each row. Three such rows are arranged at each side. At the right side 10 they are marked by a surrounding line 15. A similar, but mirror turned arrangement as the one at the right side 10 in Fig. 2, is also arranged at the left side 9.

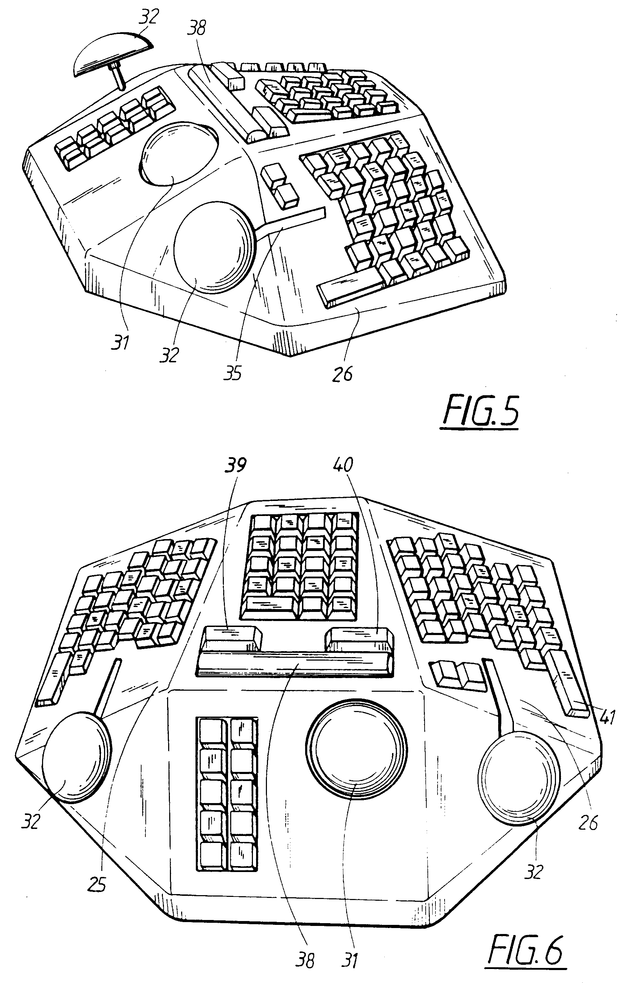

The middle frequently used keys (b) are arranged partly in a corresponding row having four keys and denoted 16 and partly along the edge 6 denoted 17 below the four rows of keys within the area 18. The two undermost rows of keys are suitably as shown displaced in the direction towards the front surface 18 to make it possible for the hand of man. If the fingers are kept in a suitable position somewhat curved then the forefinger, middle finger and the ring finger can make an approximately straight line like the three further most keys in each row while the little finger will be somewhat behind seen from the tips of the fingers. The least stressing position of the function is however obtained at such a curved position of the fingers that the fingertips make a curve having the middle finger for most (see especially Fig. 5). The arrangement of the key rows 16 or 17 is similar at each sides of the body 1, but inverted.

The division of the middle frequently used (b) and the low frequently used (c) symbols on the different keys can be carried out in different ways. It is however suitable to have the most low frequently used symbols choicable after shifting (to a position for capital letters). It shall also be mentioned that if one has a too great number of special symbols the keyboard can be made for double shifts, which is known earlier.

At the upper side 12 of the body 1 along the right and left side upper edges at each side standing longitudinal surfaces exists here shown as surfaces in a groove 18, but which alternatively can exist on lists. In the vicinity of the groove at the right side there is a shifting key 19 and along the groove at the left side there is a longitudinal key or more keys arranged in a row suitably in such a case in the same number as the rows of keys at side 9, accordingly 4 as shown in the example.

The principle arrangement of the keys of the keyboard has now been described. The principles laying behind this arrangement are the following:
1. The keys for the highly frequently used symbols (a) shall be so arranged that they are divided in a number substantially vertical but preferably somewhat bowshaped rows having a key for each of the fingers when the hand is located in the position shown in Fig. 1, that is with the thumb located against the upper side 12 of the body 1. From these keys a first row having one key for each finger can accordingly be reached in a first position with the hand close to the body of the operator. Further four keys can be reached with the same fingers by displacing the hand of the operator somewhat forwards. Further, a still more forwardly displaced position exists where the keys can be reached with the four fingers. Totally 2 x 12 keys can accordingly be reached by moving each of the hands between three different positions and by pushing with one of the four fingers, Through the position of the thumb against the upper side of the keyboard body 1 which suitably is provided with said surfaces for example in the grooves 18 to fix the position of the thumb well defined reference positions for the fingers are obtained. The position of the hand more or less forwardly displaced should be well recognized by the swinging of the arm in the shoulder link. One possibility of the invention is also to provide the upper side 12 and especially the grooves 18 with a recognizing relief for the thumb, for example a completely plane groove at the position which the thumb takes when the fingers are opposite the first row of keys, a stripe which start at a corresponding thumb position for the second key row etc.
   Through these arrangements one can without difficulties and without having any training or real education orient oneself of exactly where the hand and the fingers are located compared to the twelve highly frequently used keys on each side. There exists accordingly no difficulty to find the proper key with the hand if one knows which symbol each key is intended for. This must consequently be remembered during a learning process, which is supported by direct tactilly easily recognizable hand positions or which finger with which the touch shall be used. To use a table at the beginning which for example is placed on the upper side 12 or possibly on the display unit gives a direct possibility for orientation.
   For the middle frequently used (b) and the low frequently used (c) symbols further keys are used. The row 16 will then be reachable by putting the hand a further distance forward and by choosing a finger for the touch. The keys in the row 17 are attainable by stretching out of the little finger. The shifting occurs by means of the thumb which from the groove on the right side 18 is pushed against the shifting key 19. Special operations can be made by the key or the key row 20 by means of the thumb of the left hand.
   As for the little finger there is also suitably arranged for the fore finger a second row which can be reached by stretching out the finger.
2. The arrangement of the side surfaces 9 and 10 on the body 1 with relation to the slope in different directions is adapted for obtaining the best ergonomic conditions. Thus the sides slope against each other with relation to the horizontal plane in such a way that the hands can be maintained in an inwardly against each other sloping position which gives the least stressing position. The underarms are swingable with the hands in towards each other however without meeting completely. At said movement of the hands for displacement between rows of the keys the underarms may take a substantially horizontal position and the displacement occurs in the longitudinal direction of the underarms by swinging of the overarms in the shoulderlink without substantial stressing of the elbow joint. The weight of the arms is to a great extent taken up by the thumbs. By adapting the height between the groove 18 and the rows of keys the thumb can be adapted to its position for the best carrying of this load.

What has now been mentioned is of great importance for the function of the keyboard. Said arrangement of the keys gives a simple, tactilly recognizing possibility as to which key respective finger is ready to push down. The shape of the body and the arrangement of the keys in relation to an orienting surface for the thumbs gives a movement possibility between the different rows of keys which gives a minimal physical stress and thereby a possibility for quick operation. At the same time a basic position is obtained which gives a low load on the muscles which besides that is well adapted to the muscle functions of man and the least stressing position of the muscles.

In said concept there are some basic characteristics such that the plane of the keys slope both compared to the horizontal plane (which is defined as the plane from which the body of the operator extends in a substantially perpendicular at upright sitting position) and compared to the sagittal plane (denoted with 23 in Fig. 1). To get said physiologically advantageous sloping hand position having the thumbs sloping in towards each other the said surfaces should have an angle of 10-50°, preferably about 30° against the horizontal plane. The angle compared to the sagittal plane, or maybe simpler expressed, the angle between the side edges 5, 6 to the bottom surface 2, if this one is presumed to be horizontal, should be 20-90°, preferably about 60°, that is the angle from the sagittal plane should be half of this value symmetrically to both sides. However, the last mentioned angle is dependent on the width of the body of the keyboard. As mentioned the underarms should be directed with the hands obliquely against each other so that their extensions point to a common point which is in the extension of the sagittal plane. Herethrough the displacement between the rows of keys occurs primarily only through swinging in the shoulder joint. If the body of the keyboard then should be as wide as the length between the shoulder joints, both sides should be parallel. However, it is impractical to make the body having such a great width by reasons of space and costs. Said angle, preferably about 40° between said edges, is accordingly adapted for a width of the front of 20-25 centimetres. A smaller width should result in that the fingertips almost meet in the most forward position which is not suitable inter alia because the upper side of the body becomes triangular or almost triangular and so small that the arrangement of the thumb supports and the keys described is obstructed. It can also be desirable that further keys can be included.

Thus, the angle of the sides of the body compared to the sagittal plane, that is the angle between the sides of the body in the horizontal plane, must probably be a compromise between different wishes. With regard to the ergonomic conditions, the most convenient position must be such that the sides meet in a point in the sagittal plane which is not more than 40 centimetres ahead of the body of the operator, which gives an angle in the horizontal plane of about 90° and a distance in the front between the lower edges of the side surfaces of about 25 centimetres. Which position is the most convenient for different persons depends however on the shape of the body and may also be individual for some body positions. With regard to the shape of the body of the keyboard from other points of view, should be desirable not to exceed a width of 25 centimetres at the same time as one at least in certain cases wishes the upper surface to be so large as possible. This results in that the angle is diminished so that the bottom surface shown corresponding to a parallel trapezoid is obtained and with the extensions of the underarms meeting each other at a greater distance from the body. Also, such an arrangement gives an advantageous working position. The optimal shape can accordingly not be decided until all said factors have been determined.

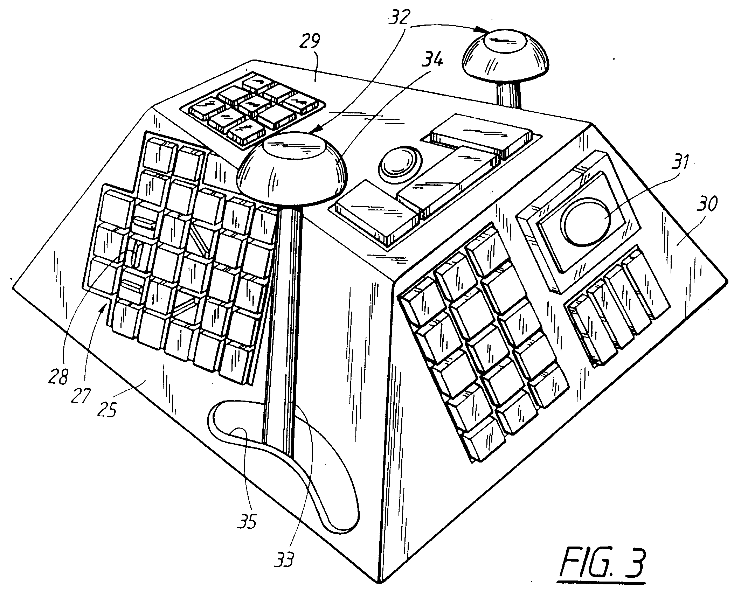

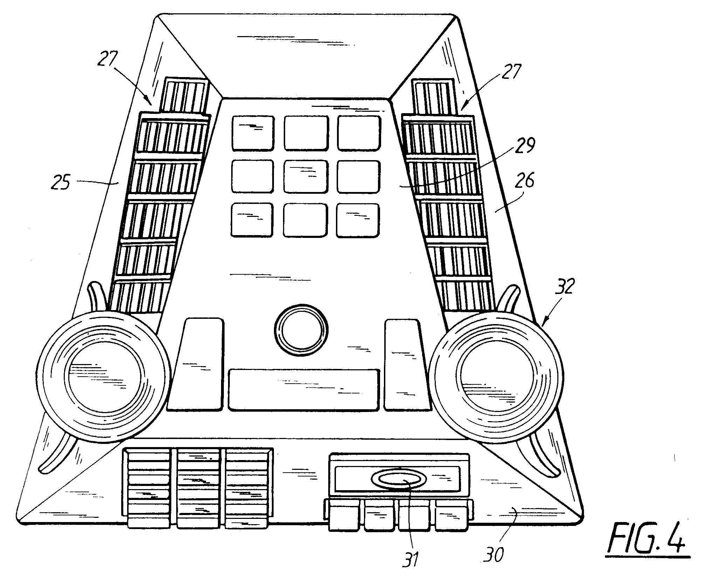

In Fig. 3 and 4 a further and more complete shape of the keyboard and its carrying body is shown. Also here two key carrying side surfaces can be found, of which only the left one is shown in Fig. 3 and having been denoted with 25. The right one has been denoted with 26 in Fig. 4. Said keys for the high, middle and certain of the low frequently used symbols can be found at said sides and are denoted as a group with 27. They are more than what has been stated earlier, and intended to comprise further low frequently used symbols. It is also indicated that some keys at such a comprising keyboard can be provided with listshaped protrusions 28 for easier recognition when so many keys exists, that the earlier described simple recognition method based on a key for each finger in each hand position is no more applicable. A further difference is that the upper side here denoted 29 comprises more keys. It has not been provided with any grooves for the thumbs but these are intended to follow the edge of the upper surface. Also the front side here 30, has keys for operation or for special symbols. With 31 is a operating member for movement of markings on a display unit denoted. It can for example have the shape of a ball which is movable in different directions (replaces a so called mouse) or a joystick. It can be operated easily by means of the thumb on the right hand.

Further two hand supports 32 are shown. They are shown here having the shape of two swingable arms 33 having a mushroom shaped resting cushion for the hand. By swinging the arms 33 can move in slots 35 in the sides 25 and 26. The purpose is that each hand shall be placed with the thenar area (the cushion shaped part of the hand inside the thumb) against the resting cushion 32. Herethrough, the hand is carried in the most favourable way. Said forward and return movement of the hand to reach the different rows of keys occurs afterwards by moving respective arm 33 completely carrying the weight of the hand. This arrangement is most suitable at keyboards which are used for writing of long running texts, but it can also provide an obstacle at keyboards which are used temporarily for shorter operations as in question terminals. It can therefore be suitable to have the hand support 32 insertable or foldable. Further installation possibilities can be introduced for keyboards for example changeability of its sides for individual adaption of the angles. This can be particularly interesting and the arrangements is adapted to be used by persons having movement handicaps.

Said supports having resting bodies arranged on the swing arms is only one embodiment example. Alternatively forward and backwards movement can be obtained by linear displacement of bodies on which the resting cushions are arranged. Herethrough, some kind of guideness arrangement is required for these bodies. One further alternative embodiment is to make the bodies stationary, but in the shape of turnable rotation bodies such as barrelformed rolls or balls. The later can then be arranged in bowles for movement in all directions. If the resting surface is made sufficiently smooth, it can exist on a completely rigid body so that a relative movement must occur between the hand and the surface.

At surfaces on bodies having some possibility for movement, for example at the embodiment shown in the drawings, a movement mechanism for the body having the surface, can for the position orientation of the hand be made including some power system. Thus, the arm can be spring loaded to take a predetermined position so that the operator with the arm feels if the arm is moved forward or backward or through increasing resistance also to what extent. Alternatively the movement of the body can be arretated so that one with the feeling can determine when certain positions are taken or past.

With such power arrangements the orientation possibility for the hand, that is the position of the fingertips in front of one or an other row of keys, can be determined. Earlier it has been mentioned that such a recognition possibility for the position of the hand can be made by means of supporting pads for the thumbs by the embodiment in the grooves 18. Then it has been mentioned that the surfaces can be provided with a recognition relief. This possibility can be replaced by, or completed with said power arrangement together with the resting surfaces for the thenar area of the hand, which is carried by the arms, the slides or some other arrangements chosen.

In Figs. 5 and 6, showing perspective views of the second embodiment of the keyboard, substantially the same parts as shown in Figs. 3 and 4 having the same denotations can be found. However, it also appears that a space bar key 38 has been arranged transversely on the arrangement between the two side faces 25 and 26. In front of the space bar key two keys for movement of the carriage, a backspace key 39 and a return key 40 are arranged. At the bottom of the side surfaces 25 and 26 there is a space bar key 41 which accordingly can be reached by the little finger. As also appears from the figures the front surface is not completely plain, but has a protruding part which via oblique corner parts continues in the side surfaces 25 and 26.

The resulting technical effect from an arrangement of this kind, that is its usability in view of the goals by the solution is obtained by several cooperating factors. One has then not only decided upon a few main factors, according to which the arrangement shall be constructed. All factors must be directed to reach the goal which is aimed at. In the present case this goal, that is to get a good orienting ability only through the feeling for quick learning also by untrained operators at the same time as a good ergonomical working procedure shall be obtained. To obtain an optimal result in this regard taking into account all factors some characteristics could best be expressed as intentions rather than direct specifications of for example the dimensions and of shape factors. How different writing or operating functions are obtained technically by manual influence by a key or some other member has not been mentioned. It should, however, immediately be understood that the keyboard can be shaped for operation of many types of typewriter equipment. Typically it can be presumed that keyboards of this kind will be used for electrically operated equipment such that electrical typewriters or computers. According to what is known earlier, the keys for operating are made as some kind of current switch or at optical techniques as ray switches or ray links. Impulses from the keyboard are then conducted to the equipment that is to be operated. All this is however well known for the man skilled in the art and the special position arrangement of the keys at the keyboard according to the invention should then not provide any particular difficulties.

## Claims

1. Keyboard for choice of symbols and having a number of keys (15) for choice by influencing of the most highly frequently used symbols at the operation intended, a number of keys (16, 17) for choice of less frequently used symbols and a number of operating members (19, 20) for operating and reprogramming of the apparatus such as a typewriter or computer equipment for which the keyboard is intended, the keys (15) for the most frequently used symbols being divided in two groups having at least substantially, mutually equal number and having the contact surfaces for the keys in each group arranged in each reference surface, the reference surfaces having a position for placing the fingers, except for the thumb, for the left hand on one of the reference surfaces, and for the right hand on the second reference surface, the reference surfaces being placed at each side of the intended sagittal plane for an operator in such a way that the reference surfaces slope against the horizontal plane which is transverse to the sagittal plane (23), having its edges turned upwardly in against each other and forming an angle to the horizontal plane for each plane of 10-50°, preferably about 30°, and having them angled towards each other with their edges turned away from the operator, each forming an angle against the sagittal plane of 10-45°, preferably about 30°, and having the keys in each group divided in a number of substantially vertically extending rows having four keys in each row,
**characterized in**
that at least one supporting means (18; 32) is provided for each hand, serving as a reference position for the fingers, which reference position enables tactile recognition of individual keys, said supporting means allowing displacements of the hand so that, in a first position, said fingers are each positioned opposite one of the four keys in a first row, and that, in a second position, said fingers are each positioned opposite the keys in the second row and so on with regard to all keys for the highly frequently used symbols.

2. Keyboard according to claim 1 or 2, **characterized** in that said supporting means is provided as longitudinal supporting surfaces (18) at the upper side of said reference plane, intended to support the thumb region of the respective hand, allowing the thumb to slide along the same, the keys and the thumb supporting surfaces being so arranged mutually that a support of the thumb is obtained in the respective, said positions of the hand.

3. Keyboard according to claim 1 or 2, **characterized** in that at the supporting surface (18) for the thumb of one hand preferably the thumb of the right hand, a longitudinal key (19) is arranged which can be reached in the different displacement positions of the hand, and which is arranged as a shift key.

4. Keyboard according to claim 3, **characterized** in that at the supporting surface (18) for the thumb of the second hand, one or more keys (20) have been arranged which can be reached by the thumb in the different displacement positions of the hand.

5. Keyboard according to any of claims 2, 3 or 4, **characterized** in that the supporting surfaces for the thumbs each are made as grooves (18) for guiding the thumb laterally.

6. Keyboard according to any of the preceeding claims 2, 3, 4 or 5, **characterized** in that the supporting surfaces (18) for the thumbs have been provided with imprints or the like for making possible a tactile recognition indication of the different displacement positions of the hand.

7. Keyboard according to claim 1, **characterized** in that said supporting means are provided as supports (32) for carrying the hands of the operator, comprising upwardly directed portions which are shaped as resting surfaces (37) for carrying each hand at its inner side, preferably its thenar area.

8. Keyboard according to claim 7, **characterized** in that said supports (32) each comprise an arm having an upper end carrying said resting surface (34) and which is swingably hinged at its other end.

9. Keyboard according to claim 7, **characterized** in that said support (32) has been arranged as bodies displaceably carried by body guides, carrying said resting surfaces (34).

10. Keyboard according to claim 9, **characterized** in that said supports (32) each have been shaped as a rotatable body, such as a roller or a ball, the periphery of which forms said resting surface (34).

11. Keyboard according to any of claims 7 to 10, **characterized in** that said hand supports (32) are provided to be biased by a force, such as a springing force or a blocking force, facilitating a perception of the positon of the support (32) by its resistance against displacements of the respective hand.

## Patentansprüche

1. Tastatur zur Auswahl von Symbolen und mit einer Zahl von Tasten (15), durch die durch Einflußnahme die am häufigsten verwendeten Symbole für die vorgesehene Bedienung auswählbar sind, einer Zahl von Tasten (16, 17), durch die weniger häufig verwendete Symbole auswählbar sind, und eine Zahl von Betätigungsteilen (19, 20), durch die eine Vorrichtung, wie beispielsweise eine Schreibmaschine oder ein Computerzubehör, für die, bzw. das die Tastatur vorgesehen ist, betreibbar und erneut programmierbar ist, wobei die Tasten (15) für die am meisten verwendeten Symbole in zwei Gruppen unterteilt sind, die mindestens im wesentlichen eine wechselseitig gleiche Zahl besitzten und deren Kontaktoberflächen für die Tasten in jeder Gruppe in dieser Bezugsoberfläche angeordnet sind, wobei die Bezugsoberflächen eine Stellung zur Anordnung der Finger, ausgenommen für den Daumen, der linken Hand auf einer der Bezugsflächen und für die rechte Hand auf der zweiten Bezugsfläche aufweisen, wobei die Bezugsflächen an jeder Seite der vorgesehenen Symmetrieebene für eine Bedienungsperson in der Weise angeordnet sind, daß die Bezugsoberflächen gegen die horizontale Ebene geneigt sind, welche quer zu der Symmetrieebene (23) verläuft, wobei deren Ränder nach oben gegeneinander gekehrt sind und einen Winkel mit der horizontalen Ebene für jede Ebene von 10-50°, vorzugsweise etwa 30°, bilden, und wobei die Bezugsoberflächen zueinander abgewinkelt sind, wobei ihre Ränder von der Bedienungsperson abgekehrt sind, wobei jede Bezugsebene mit der Symmetrieebene einen Winkel von 10-45°, vorzugsweise etwa 30°, bildet, und wobei jeder die Tasten in jeder Gruppe in eine Zahl von im wesentlichen sich vertikal erstreckenden Reihen unterteilt sind, die vier Tasten in jeder Reihe aufweisen,
dadurch gekennzeichnet,
daß wenigstens eine Halteeinrichtung (18; 32) für jede Hand vorgesehen ist, welche als Bezugsstellung für die Finger fungiert, wobei diese Bezugstellung eine taktile Wiedererkennung von individuellen Tasten ermöglicht, wobei die Halteeinrichtung Verlagerungen der Hand derart ermöglicht, daß die Finger in einer ersten Stellung jeweils gegenüber einem der vier Tasten in einer ersten Reihe positioniert sind, und daß in einer zweiten Stellung die Finger jeweils gegenüber den Tasten in der zweiten Reihe positioniert sind, usw. bezüglich aller Tasten für die sehr häufig verwendeten Symbole.

2. Tastatur nach Anspruch 1,
dadurch gekennzeichnet,
daß die Halteeinrichtung als längliche Halteflächen (18) an der oberen Seite der Bezugsebene vorgesehen ist, die zur Lagerung des Daumenbereichs der jeweiligen Hand dienen, wobei der Daumen entlang derselben zu gleiten vermag, wobei die Tasten und die Daumenlagerflächen so wechselseitig angeordnet sind, daß eine Lagerung des Daumens in den jeweiligen Stellungen der Hand erreicht ist.

3. Tastatur nach Anspruch 1 oder 2,
dadurch gekennzeichnet,
daß an der Haltefläche (18) für den Daumen einer Hand, vorzugsweise für den Daumen der rechten Hand, eine längliche Taste (19) angeordnet ist, die in unterschiedlichen Verlagerungsstellungen der Hand erreichbar ist und die als Schubtaste angeordnet ist.

4. Tastatur nach Anspruch 3,
dadurch gekennzeichnet,
daß an der Haltefläche (18) für den Daumen der zweiten Hand eine oder mehrere Tasten (20) angeordnet sind, die in verschiedenen Verlagerungsstellungen der Hand durch den Daumen erreichbar sind.

5. Tastatur nach einem der Ansprüche 2, 3 oder 4,
dadurch gekennzeichnet,
daß die Halteflächen für die Daumen jeweils als Nuten (18) zum seitlichen Führen des Daumens ausgebildet sind.

6. Tastatur nach einem der vorangehenden Ansprüche 2, 3, 4 oder 5,
dadurch gekennzeichnet,
daß die Halteflächen (18) für die Daumen mit Einprägungen oder dergleichen zur Ermöglichung einer taktilen Wiedererkennung einer Angabe von unterschiedlichen Verlagerungsstellungen der Hand versehen sind.

7. Tastatur nach Anspruch 1,
dadurch gekennzeichnet,
daß die Halteeinrichtungen als Halter (32) zum Tragen der Hände der Bedienungsperson vorgesehen sind, die nach oben gerichtete Abschnitte besitzt, welche als Ruheflächen (34) zum Tragen jeder Hand an deren Innenseite, bevorzugt an deren Thenarbereich, gestaltet sind.

8. Tastatur nach Anspruch 7,
dadurch gekennzeichnet,
daß die Halter (32) jeweils einen Arm aufweisen, der eine obere Endfläche besitzt, welche die Ruhefläche (34) trägt und welche verschwenkbar in ihrem anderen Ende angelenkt ist.

9. Tastatur nach Anspruch 7,
dadurch gekennzeichnet,
daß die Halter (32) als Körper vorgesehen sind, die von Körperführungen verlagerbar getragen sind, welche die hohen Ruheflächen (34) tragen.

10. Tastatur nach Anspruch 9,
dadurch gekennzeichnet,
daß die Halter (32) jeweils als ein Drehkörper, wie beispielsweise eine Walze oder eine Kugel gestaltet sind, die an Umfang die Ruhefläche (34) bilden.

11. Tastatur nach einem der Ansprüche 7 bis 10,
dadurch gekennzeichnet,
daß die Handhalter (32) mittels einer Kraft, wie eine Federkraft oder eine Blockierkraft, für das Erleichtern einer Wahrnehmung der Stellung des Halters (32) durch dessen Widerstand gegen Verlagerungen der jeweiligen Hand vorgespannt sind.

## Revendications

1. Clavier destiné à la sélection de symboles et ayant un certain nombre de touches (15) destinées à la sélection par action des symboles utilisés le plus fréquemment pour le fonctionnement prévu, un certain nombre de touches (16, 17) de sélection de symboles utilisés moins fréquemment et un certain nombre d'organes de manoeuvre (19, 20) destinés à commander et reprogrammer l'appareil, tel qu'un équipement à machine à écrire ou ordinateur, auquel est destiné le clavier, les touches (15) des symboles utilisés le plus fréquemment étant réparties en deux groupes en nombres au moins pratiquement égaux et ayant des surfaces de contact des touches de chaque groupe qui sont placées à chaque surface de référence, les surfaces de référence ayant une position pour l'emplacement des doigts, sauf du pouce, de la main gauche sur l'une des surfaces de référence et de la main droite sur la seconde surface de référence, les surfaces de référence étant placées de part et d'autre du plan sagittal prévu pour un opérateur de manière que les surfaces de référence soient inclinées par rapport au plan horizontal transversal au plan sagittal (23) et ayant des bords tournés vers le haut et se rapprochant en formant en angle avec le plan horizontal qui est de 10 à 50° et de préférence d'environ 30° pour chaque plan, et inclinées elles-mêmes les unes vers les autres avec des bords éloignés de l'opérateur qui forment chacun un angle de 10 à 45°, et de préférence d'environ 30°, avec le plan sagittal, les touches de chaque groupe étant divisées en un certain nombre de lignes sensiblement verticales comprenant quatre touches dans chaque ligne,
caractérisé en ce que
un dispositif de support au moins (18 ; 32) est associé à chaque main et est utilisé comme position de référence pour les doigts, la position de référence permet la reconnaissance tactile des touches individuelles, le dispositif de support permettant des déplacements de la main afin que, dans une première position, les doigts soient placés chacun en face de l'une des quatre touches d'une première ligne et que, dans une seconde position, les doigts soient placés chacun en face des touches d'une seconde ligne, et ainsi de suite pour toutes les touches des symboles utilisés le plus fréquemment.

2. Clavier selon la revendication 1 ou 2, caractérisé en ce que le dispositif de support est constitué de surfaces longitudinales de support (18) placées à la face supérieure du plan de référence et destinées à supporter la région du pouce de la main respective et à permettre le glissement du pouce le long de la surface, les touches et les surfaces de support de pouce étant disposées mutuellement de manière qu'un support du pouce soit réalisé pour les positions respectives de la main.

3. Clavier selon la revendication 1 ou 2, caractérisé en ce que, au niveau de la surface de support (18) du pouce d'une main, de préférence de la main droite, une touche longitudinale (19) est disposée afin qu'elle puisse être atteinte dans les différentes positions de déplacement de la main, cette touche étant destinée à constituer une touche de commande de majuscules.

4. Clavier selon la revendication 3, caractérisé en ce que, au niveau de la surface de support (18) du pouce de la seconde main, une ou plusieurs touches (20) ont été disposées afin qu'elles puissent être atteintes par le pouce aux différentes positions de déplacement de la main.

5. Clavier selon l'une des revendications 2, 3 et 4, caractérisé en ce que les surfaces de support des pouces sont formées chacune avec des gorges (18) de guidage latéral du pouce.

6. Clavier selon l'une quelconque des revendications précédentes 2, 3, 4 et 5, caractérisé en ce que les surfaces de support (18) des pouces ont des empreintes ou dispositifs analogues permettant de donner une indication pour la reconnaissance tactile des différentes positions de déplacement de la main.

7. Clavier selon la revendication 1, caractérisé en ce que le dispositif de support est constitué de supports (32) destinés à supporter les mains de l'opérateur et comprenant des parties dirigées vers le haut et qui ont la forme de surfaces d'appui (37) destinées à supporter chaque main à sa face interne, de préférence dans la région de la paume.

8. Clavier selon la revendication 7, caractérisé en ce que les supports (32) comportent chacun un bras ayant une extrémité supérieure supportant la surface d'appui (34) et qui est articulé à l'autre extrémité afin qu'il puisse pivoter.

9. Clavier selon la revendication 7, caractérisé en ce que le support (32) est réalisé sous forme de corps supportés par des guides afin qu'ils puissent se déplacer, et portant les surfaces d'appui (34).

10. Clavier selon la revendication 9, caractérisé en ce que les supports (32) ont chacun la forme d'un corps rotatif, tel qu'une rotule ou une bille dont la périphérie forme la surface d'appui (34).

11. Clavier selon l'une quelconque des revendications 7 à 10, caractérisé en ce que les supports (32) des mains sont réalisés de manière qu'ils soient rappelés par une force, telle qu'une force d'élasticité ou une force de blocage, facilitant une perception de la position du support (32) par sa résistance aux déplacements de la main respective.
